# EUROPÄISCHE PATENTSCHRIFT

(11) **EP 4 230 443 B1**
(45) Veröffentlichungstag und Bekanntmachung des Hinweises auf die Patenterteilung: **26.03.2025**
(21) Anmeldenummer: 23150959.7
(22) Anmeldetag: 10.01.2023
(51) Int. Cl.: B60C 23/04, B60R 25/30, G01S 5/02, G06Q 10/20, G07C 5/00, G06Q 10/0833

(54) **VERFAHREN ZUR POSITIONSBESTIMMUNG EINES FAHRZEUGREIFENS**
METHOD FOR DETERMINING THE POSITION OF A VEHICLE TYRE
PROCÉDÉ DE DÉTERMINATION DE LA POSITION D'UN PNEU DE VÉHICULE

(30) Priorität: 22.02.2022 DE 102022201823
(43) Veröffentlichungstag der Anmeldung: 23.08.2023
(73) Patentinhaber: Continental Reifen Deutschland GmbH, 30175 Hannover (DE)
(72) Erfinder: Sahlmüller, Baldo, 30165 Hannover (DE); Lehmann, Jörg, 30165 Hannover (DE); Nettelmann, Marc, 30165 Hannover (DE); James, Akhil, 30165 Hannover (DE); von Janta Lipinski, Lukas, 30165 Hannover (DE)
(74) Vertreter: Continental Corporation

(56) Entgegenhaltungen:
- EP-A1- 3 560 736
- EP-A1- 3 722 162
- CN-U- 203 267 682
- DE-A1- 102016 225 429
- US-A1- 2017 057 461

## Beschreibung

Die Erfindung betrifft ein Verfahren zur Positionsbestimmung eines Fahrzeugreifens.

Es ist bekannt, dass es insbesondere für Flottenbetreiber von Fahrzeugflotten interessant ist, die Wartung der Fahrzeugreifen an den einzelnen Fahrzeugen zu optimieren. Beispielsweise besteht eine Aufgabe darin, die Reifendruckkontrolle an den einzelnen Fahrzeugreifen automatisiert durchzuführen. Eine andere Aufgabe kann darin bestehen, den Standort von einzelnen Fahrzeugreifen zu lokalisieren.

Die EP 3 560 736 A1 betrifft ein Verfahren zum Übertragen von Daten eines Reifenmoduls zu einem zentralen Datenserver. Die EP 3 722 162 A1 betrifft ein Reifendiebstahlschutzsystem und eine Vorrichtung sowie ein Verfahren zum Regulieren eines Fahrzeuges. Die CN 203 267 682 U betrifft einen Reifendruckerkennungssensor mit Diebstahlschutzfunktion. Weiterer Stand der Technik ist in der US 2017/057461 A1 zu finden.

Der Erfindung lag die Aufgabe zugrunde, ein Verfahren bereitzustellen, mit dem eine Positionsbestimmung eines Fahrzeugreifens erfolgen kann.

Gelöst wird die Aufgabe durch ein Verfahren mit den folgenden Schritten:
a) Bereitstellen eines Fahrzeugreifens mit einem Reifenmodul,
   wobei das Reifenmodul mindestens eine Funkeinheit für die Verbindung mit einem Mobilfunknetz aufweist,
b) Herstellen einer direkten Verbindung zwischen der Funkeinheit des Reifenmoduls mit einer Zelle eines Mobilfunknetzes,
c) Positionsbestimmung des Reifenmoduls in Verbindung mit der Positionsbestimmung der jeweiligen Zelle des Mobilfunknetzes,
d) Automatisierte Standortbestimmung des Fahrzeugreifens mit dem Reifenmodul,
wobei die Standortbestimmung über die Position der jeweiligen Zelle des Mobilfunknetzes erfolgt, dadurch dass sich der Fahrzeugreifen an einer Position befindet, die der Zelle des Mobilfunknetzes zugeordnet ist.

Ein Vorteil der Erfindung ist insbesondere darin zu sehen, dass mit dem neuen Verfahren auf einfache Weise eine Positionsbestimmung von Fahrzeugreifen erfolgen kann. Fahrzeugreifen können mit Reifenmodulen ausgestattet werden, um beispielsweise den Reifendruck automatisiert zu kontrollieren. Die Reifenmodule werden mit einer Funkeinheit versehen, die eine direkte Verbindung mit einer Zelle von einem Mobilfunknetz aufbauen können. Anschließend kann eine automatisierte Positionsbestimmung des Fahrzeugreifens erfolgen. Ein Flottenbetreiber kann dadurch auf einfache Weise feststellen, wo sich die einzelnen Fahrzeugreifen eines Fahrzeuges befinden. Beispielsweise kann er dadurch auf einfache Weise überprüfen, ob die richtigen Fahrzeugreifen am jeweiligen Fahrzeug angeordnet oder montiert sind.

In einer vorteilhaften Weiterbildung der Erfindung ist vorgesehen, dass die Fahrzeugreifen mit den Reifenmodulen an einem Fahrzeug oder einem Fahrzeuganhänger angeordnet sind,
wobei die Identifizierungscodes der Reifenmodule jeweils einem Fahrzeug oder Fahrzeuganhänger zugeordnet sind,
wodurch eine Positionsbestimmung des Fahrzeuges oder Fahrzeuganhängers erfolgen kann.

Dadurch kann der Flottenbetreiber auf einfache Weise feststellen, wo sich seine Fahrzeuge oder Fahrzeuganhänger befinden.

In einer weiteren vorteilhaften Weiterbildung der Erfindung ist vorgesehen, dass die Positionsdaten der Reifenmodule an eine Datenbank in einer Cloud übermittelt und automatisiert weiterverarbeitet werden.

Dadurch werden dem Flottenbetreiber ein einfacher Zugang zu den Positionsdaten der Fahrzeugreifen bereitgestellt.

**In** einer weiteren vorteilhaften Weiterbildung der Erfindung ist vorgesehen, dass mit den Positionsdaten der Reifenmodule ermittelt wird, ob sich das jeweilige Fahrzeug bewegt oder in einer Parkposition befindet.

Dadurch kann der Flottenbetreiber auf einfache Weise entscheiden, an welchen Fahrzeugen Wartungsarbeiten durchgeführt werden können.

**In** einer weiteren vorteilhaften Weiterbildung der Erfindung ist vorgesehen, dass mit den Positionsdaten der Reifenmodule ermittelt wird,
ob der jeweilige Fahrzeugreifen am zugeordneten Fahrzeug angeordnet ist oder vom Fahrzeug entfernt wurde.

Dadurch kann beispielsweise der Diebstahl von Fahrzeugreifen auf einfache Weise detektiert werden.

In einer weiteren vorteilhaften Weiterbildung der Erfindung ist vorgesehen, dass mit den Positionsdaten der Reifenmodule ermittelt wird,
an welchem Standort sich der entfernte Fahrzeugreifen befindet.

Dadurch erhält der Flottenbetreiber die Information, wo sich der beispielsweise gestohlene Fahrzeugreifen befindet.

In einer weiteren vorteilhaften Weiterbildung der Erfindung ist vorgesehen, dass mit den Positionsdaten der Reifenmodule ermittelt wird,
an welchem Standort sich ein bestimmter Fahrzeuganhänger mit den jeweiligen Reifenmodulen befindet.

Dadurch kann der Flottenbetreiber auf einfache Weise den Standort seiner Fahrzeuganhänger bestimmen.

In einer weiteren vorteilhaften Weiterbildung der Erfindung ist vorgesehen, dass das Reifenmodul auch mit den Komponenten eines Reifendruckkontrollsensors ausgestattet ist. Dadurch muss nur eine Komponente am Fahrzeugreifen angebracht werden.

Anhand eines Ausführungsbeispiels wird die Erfindung im Folgenden näher beschrieben.

Es zeigt:

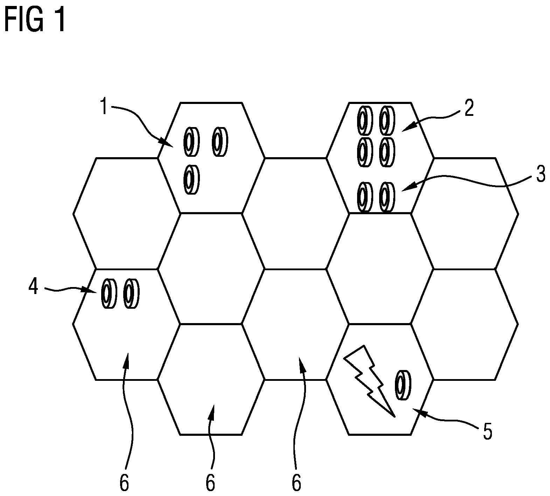

Fig. 1: Ein schematisches Netz mit Mobilfunkzellen.

Die Figur 1 zeigt ein Ausführungsbeispiel.

In der Figur ist ein schematisches Netz mit einzelnen Zellen 6 eines Mobilfunknetzes dargestellt. Jede Zelle 6 ist ortsgebunden und befindet sich an einer bestimmten Position in einem Mobilfunknetz.

Die Fahrzeugreifen 1 sind an einem Fahrzeug A angeordnet. Alle Fahrzeugreifen sind mit Reifenmodulen versehen, die eine Funkeinheit besitzen.

Die Funkeinheit der Reifenmodule stellt eine Mobilfunkverbindung mit der dargestellten Zelle des Mobilfunknetzes her. Die entsprechenden Verbindungsdaten werden an eine Cloud übermittelt. Anschließend lassen sich die Fahrzeugreifen 1 der dargestellten Zelle des Mobilfunknetzes zuordnen. Dadurch kann der Flottenbetreiber auf einfache Weise ermitteln, dass sich die Fahrzeugreifen 1 von Fahrzeug A an der bestimmten Position befinden, die der Mobilfunkzelle zugeordnet ist. Der Fahrzeugreifen 5 ist ein gestohlener Fahrzeugreifen von Fahrzeug A. Diese Information lässt sich dadurch herleiten, dass über die Funkeinheit des Fahrzeugreifens 5 eine andere Position ermittelt wird, die nicht mit der Position der Fahrzeugreifen 1 übereinstimmt.

Die Fahrzeugreifen 2 sind an einem Fahrzeug B angeordnet. Dieses Fahrzeug besitzt einen Anhänger B mit den Fahrzeugreifen 3.

Der Flottenbetreiber kann mit den Reifenmodulen und den Funkeinheiten, die jeweils eine direkte Verbindung mit dem Mobilfunknetz aufbauen, das Fahrzeug B und den Anhänger B mit einer hohen Genauigkeit lokalisieren.

An einem Anhänger C sind die Fahrzeugreifen 4 angeordnet. Der Flottenbetreiber kann mit den Reifenmodulen und den Funkeinheiten, die an den Fahrzeugreifen 4 montiert sind, auf einfache Weise feststellen, wo sich der Anhänger C befindet.

### Bezugszeichenliste

- 1: Fahrzeugreifen von Fahrzeug A
- 2: Fahrzeugreifen von Fahrzeug B
- 3: Fahrzeugreifen von Anhänger B
- 4: Fahrzeugreifen von Anhänger C
- 5: Gestohlener Fahrzeugreifen von Fahrzeug A
- 6: Einzelne Zellen des Mobilfunknetzes

## Patentansprüche

1. Verfahren zur Positionsbestimmung eines Fahrzeugreifens mit den folgenden Schritten:
a) Bereitstellen eines Fahrzeugreifens (1, 2, 3, 4, 5) mit einem Reifenmodul, wobei das Reifenmodul mindestens eine Funkeinheit für die Verbindung mit einem Mobilfunknetz aufweist,
b) Herstellen einer direkten Verbindung zwischen der Funkeinheit des Reifenmoduls mit einer Zelle (6) eines Mobilfunknetzes,
c) Positionsbestimmung des Reifenmoduls in Verbindung mit der Positionsbestimmung der jeweiligen Zelle (6) des Mobilfunknetzes,
**gekennzeichnet durch** eine
d) Automatisierte Standortbestimmung des Fahrzeugreifens (1, 2, 3, 4, 5) mit dem Reifenmodul,
wobei die Standortbestimmung über die Position der jeweiligen Zelle (6) des Mobilfunknetzes erfolgt, dadurch dass sich der Fahrzeugreifen (1, 2, 3, 4, 5) an einer Position befindet, die der Zelle (6) des Mobilfunknetzes zugeordnet ist.

2. Verfahren nach Anspruch 1,
**dadurch gekennzeichnet, dass**
die Fahrzeugreifen(1, 2, 3, 4, 5) mit den Reifenmodulen an einem Fahrzeug oder einem Fahrzeuganhänger angeordnet sind,
wobei die Identifizierungscodes der Reifenmodule jeweils einem Fahrzeug oder Fahrzeuganhänger zugeordnet sind,
wodurch eine Positionsbestimmung des Fahrzeuges oder Fahrzeuganhängers erfolgen kann.

3. Verfahren nach einem der vorhergehenden Ansprüche,
**dadurch gekennzeichnet, dass**
die Positionsdaten der Reifenmodule an eine Datenbank in einer Cloud übermittelt und automatisiert weiterverarbeitet werden.

4. Verfahren nach einem der vorhergehenden Ansprüche,
**dadurch gekennzeichnet, dass**
mit den Positionsdaten der Reifenmodule ermittelt wird, ob sich das jeweilige Fahrzeug bewegt oder in einer Parkposition befindet.

5. Verfahren nach einem der vorhergehenden Ansprüche,
**dadurch gekennzeichnet, dass**
mit den Positionsdaten der Reifenmodule ermittelt wird,
ob der jeweilige Fahrzeugreifen (1, 2, 3, 4, 5) am zugeordneten Fahrzeug angeordnet ist oder entfernt wurde.

6. Verfahren nach einem der vorhergehenden Ansprüche,
**dadurch gekennzeichnet, dass**
mit den Positionsdaten der Reifenmodule ermittelt wird,
an welchem Standort sich der entfernte Fahrzeugreifen (5) befindet.

7. Verfahren nach einem der vorhergehenden Ansprüche,
**dadurch gekennzeichnet, dass**
mit den Positionsdaten der Reifenmodule ermittelt wird,
an welchem Standort sich ein bestimmter Fahrzeuganhänger mit den jeweiligen Reifenmodulen befindet.

8. Verfahren nach einem der vorhergehenden Ansprüche,
**dadurch gekennzeichnet, dass**
das Reifenmodul auch mit den Komponenten eines Reifendruckkontrollsensors ausgestattet ist.

## Claims

1. Method for determining the position of a vehicle tyre, having the following steps:
a) providing a vehicle tyre (1, 2, 3, 4, 5) having a tyre module, the tyre module having at least one radio unit for the connection to a mobile radio network,
b) establishing a direct connection between the radio unit of the tyre module and a cell (6) of a mobile radio network,
c) determining the position of the tyre module in conjunction with determining the position of the respective cell (6) of the mobile radio network, **characterized by**
d) automated determination of the location of the vehicle tyre (1, 2, 3, 4, 5) having the tyre module,
wherein the location is determined via the position of the respective cell (6) of the mobile radio network by virtue of the fact that the vehicle tyre (1, 2, 3, 4, 5) is located at a position which is assigned to the cell (6) of the mobile radio network.

2. Method according to Claim 1,
**characterized in that**
the vehicle tyres (1, 2, 3, 4, 5) having the tyre modules are arranged on a vehicle or a vehicle trailer,
wherein the identification codes of the tyre modules are each assigned to a vehicle or vehicle trailer,
thus making it possible to determine the position of the vehicle or vehicle trailer.

3. Method according to one of the preceding claims,
**characterized in that**
the position data relating to the tyre modules are transmitted to a database in a cloud and are automatically processed further.

4. Method according to one of the preceding claims,
**characterized in that**
the position data relating to the tyre modules are used to determine whether the respective vehicle is moving or is in a parked position.

5. Method according to one of the preceding claims,
**characterized in that**
the position data relating to the tyre modules are used to determine whether the respective vehicle tyre (1, 2, 3, 4, 5) is arranged on the assigned vehicle or has been removed.

6. Method according to one of the preceding claims,
**characterized in that**
the position data relating to the tyre modules are used to determine
the location at which the removed vehicle tyre (5) is situated.

7. Method according to one of the preceding claims,
**characterized in that**
the position data relating to the tyre modules are used to determine
the location at which a specific vehicle trailer with the respective tyre modules is situated.

8. Method according to one of the preceding claims,
**characterized in that**
the tyre module is also equipped with the components of a tyre pressure monitoring sensor.

## Revendications

1. Procédé de détermination de la position d'un pneumatique de véhicule comprenant les étapes suivantes :
a) munir un pneumatique de véhicule (1, 2, 3, 4, 5) d'un module de pneumatique, le module de pneumatique présentant au moins une unité radio pour la connexion à un réseau de téléphonie mobile,
b) établir une connexion directe entre l'unité radio du module de pneumatique et une cellule (6) d'un réseau de téléphonie mobile,
c) détermination de la position du module de pneumatique en liaison avec la détermination de la position de la cellule (6) respective du réseau de téléphonie mobile, **caractérisé par** une
d) détermination automatisée de la position du pneumatique du véhicule (1, 2, 3, 4, 5) au moyen du module de pneumatique,
la détermination de la position s'effectuant par le biais de la position de la cellule respective (6) du réseau de téléphonie mobile, par le fait que le pneumatique du véhicule (1, 2, 3, 4, 5) se trouve en une position qui est associée à la cellule (6) du réseau de téléphonie mobile.

2. Procédé selon la revendication 1,
**caractérisé en ce que**
les pneumatiques de véhicule (1, 2, 3, 4, 5) sont montés avec les modules de pneumatiques sur un véhicule ou une remorque de véhicule,
les codes d'identification des modules de pneumatiques étant respectivement associés à un véhicule ou à une remorque de véhicule,
ce qui permet de déterminer la position du véhicule ou de la remorque de véhicule.

3. Procédé selon l'une des revendications précédentes,
**caractérisé en ce que**
les données de position des modules de pneumatiques sont transmises à une base de données dans un cloud et traitées de manière automatisée.

4. Procédé selon l'une des revendications précédentes,
**caractérisé en ce que**
les données de position des modules de pneumatiques permettent de déterminer si le véhicule concerné se déplace ou se trouve dans une position de stationnement.

5. Procédé selon l'une des revendications précédentes,
**caractérisé en ce que**
il est déterminé, au moyen des données de position des modules de pneumatiques,
si le pneumatique du véhicule (1, 2, 3, 4, 5) concerné se trouve sur le véhicule concerné ou s'il a été retiré.

6. Procédé selon l'une des revendications précédentes,
**caractérisé en ce que**
il est déterminé, au moyen des données de position des modules de pneumatiques,
à quel endroit se trouve le pneumatique (5) du véhicule qui a été retiré.

7. Procédé selon l'une des revendications précédentes,
**caractérisé en ce que**
il est déterminé, au moyen des données de position des modules de pneumatiques,
à quel endroit se trouve une remorque de véhicule déterminée au moyen des modules de pneumatiques respectifs.

8. Procédé selon l'une des revendications précédentes,
**caractérisé en ce que**
le module de pneumatique est également équipé des composants d'un capteur de surveillance de la pression des pneumatiques.
